# EUROPÄISCHE PATENTSCHRIFT

(11) **EP 1 524 431 B1**
(45) Veröffentlichungstag und Bekanntmachung des Hinweises auf die Patenterteilung: **13.06.2012**
(21) Anmeldenummer: 04016620.9
(22) Anmeldetag: 15.07.2004
(51) Int. Cl.: F03D 7/04, F03D 1/06

(54) **Rotorblatt einer Windenergieanlage mit Hinterkantenklappen**
Wind turbine blade with trailing edge flaps
Pale pour éolienne avec volets de bord de fuite

(30) Priorität: 16.10.2003 DE 10348060
(43) Veröffentlichungstag der Anmeldung: 20.04.2005
(73) Patentinhaber: Windreich AG, 72649 Wolfschlugen (DE)
(72) Erfinder: Balz, Willi, Dipl.-Wirt.-Ing., 72649 Wolfschlugen (DE); Weiblen, Frank Hermann, Dipl.-Ing., 73765 Neuhausen a.d.F. (DE)
(74) Vertreter: Weiss, Peter

(56) Entgegenhaltungen:
- EP-A- 1 186 532
- DE-A- 2 908 761
- DE-A- 2 922 885
- DE-C- 873 980
- US-A- 5 570 859
- US-A1- 2003 091 436

## Beschreibung

Die Erfindung betrifft ein Rotorblatt eines Rotors einer Windenergieanlage, mit sich über die Rotorblattlänge erstreckender Blattvorder- und Blatthinterkante.

Rotorblätter der genannten Art sind vorzugsweise zu mehreren radial um eine Nabe angeordnet. Die Rotorblätter sind vorzugsweise verwunden. Sie dienen als Vortriebsorgane bei Luftanströmung zur Erzeugung einer Drehbewegung um die Nabe. Bei bekannten Windenergieanlagen werden Rotoren mit entsprechend den am Standort zu erwartenden Windverhältnissen ausgebildeten Rotorblättern oder einem Rotorblatt (Einflügler) gewählt, d.h., die Formgebung, Verwindung, Blattlänge, Blatttiefe und so weiter sind bei der Herstellung individuell auf den Einsatzstandort abgestimmt worden und können daher im Betrieb nicht verändert werden.

Das Dokument DE 873 980 C beschreibt einen verstellbaren Flügel für Windmotoren, wobei der Flügel aus einer Leitfläche, einem Mittelteil und einer Steuerfläche besteht.

Das Dokument EP 1 186 532 A beschreibt eine Drehmomentbegrenzungseinrichtung mit zwei Bremsen zur Reduktion von Asymmetrien bei Flugzeugflügeln.

Das Dokument US 2003/091436 A1 beschreibt ein Verfahren und eine Vorrichtung zur Regulierung der Luftumströmung des Flügels einer Windkraftanlage.

Das Dokument DE 29 08 761 A beschreibt Flügel für Windmotoren, die nach aerodynamischen Grundsätzen konstruiert sind und Start- und Landehilfen eingebaut haben.

Das Dokument "Hau, Erich: "Windkraftanlagen; Grundlagen, Technik, Einsatz, Wirtschaftlichkeit", 2. Aufl. Springer-Verlag Berlin Heidelberg New York, 1996, Seiten 113,116,117" offenbart ein rudergesteuertes Rotorblatt, welches vier Hinterkantenklappen mit zur Blattspitze des Rotors hin abnehmenden Klappentiefen umfasst.

Aufgabe der Erfindung ist es, ein Rotorblatt eines Rotors einer Windenergieanlage zu schaffen, das bei der Betriebsführung individuell auf die jeweils vorherrschende Situation angepasst werden kann.

Diese Aufgabe wird erfindungsgemäß durch das im Anspruch 1 angegebene Rotorblatt gelöst. Der Bereich der Blatthinterkante ist zumindest über einen Abschnitt der Rotorblattlänge als unabhängig voneinander im Schwenkwinkel einstellbare aerodynamische Klappen ausgebildet. Die verschwenkbaren, und damit die aerodynamischen Eigenschaften des Rotorblatts verändernden Klappen können in ihrem Schwenkwinkel derart eingestellt werden, dass eine Performanceanpassung erfolgt. Es kann daher eine Anpassung an die Anströmung und/oder Widerstands- und Auftriebsverhältnisse erfolgen. Der aerodynamische Auftrieb lässt sich verstärken oder verringern oder gezielt bis zum Strömungsabriss beeinflussen. Durch die Erfindung ist ein Lastreduktionsbetrieb, beispielsweise bei extrem starker Anströmung, möglich.

Vorteilhaft ist es, wenn die Klappen in Richtung auf die Oberseite und/oder in Richtung auf die Unterseite des Rotorblatts verschwenkbar gelagert sind. Mithin lassen sie sich aus einer mittigen Neutralstellung sowohl in die eine als auch in die andere Richtung verschwenken. Auf diese Art und Weise ist es möglich, die Profilmittellinie des Rotorblatts entsprechend zu beeinflussen. Die Folge ist ein entsprechendes aerodynamisches Verhalten.

Es ist von Vorteil, wenn eine, die Klappen in gewünschte Schwenkposition verlagernde und haltende Steuereinrichtung vorgesehen ist. Die Steuereinrichtung verschwenkt die Klappen in die gewünschte Position und fixiert diese Position so lange, bis durch erneute Steuerbefehle eine neue Position eingenommen werden soll.

Die Klappen liegen alle im Bereich der Blatthinterkante, wobei aufgrund ihrer Radialanordnung zum Drehkreis des Rotors mindestens eine Klappe vorhanden ist, die von der Drehachse des Rotors weiter entfernt liegt als eine andere Klappe, die mehr zur Drehachse hin angeordnet ist. Die Umfangsgeschwindigkeit ist daher an der Klappe umso größer, je weiter entfernt sie von der Drehachse liegt. Da die mehreren Klappen unabhängig voneinander in ihrer Stellung eingestellt werden können, lassen sich sehr feindosierte aerodynamische Veränderungen am Rotorblattprofil vornehmen.

Die Klappentiefe einer Klappe kann in Abhängigkeit von der Rotorblatttiefe bei der Konstruktion bestimmt werden. Mehrere Klappen an einem Rotorblatt weisen unterschiedlich große Klappentiefen auf. So ist es beispielsweise möglich, eine Klappe mit großer Klappentiefe für das Bremsen des Rotors oder für eine Anfahrhilfe des Rotors zu nutzen. Eine andere Klappe mit kleinerer Klappentiefe kann verwendet werden, um die Performance im Normalbetrieb optimal einzustellen.

Insbesondere kann vorgesehen sein, dass die sich an der Hinterkante des Rotorblatts befindlichen Klappen direkt aneinandergrenzen, also -über die Länge des Rotorblatts gesehen- direkt benachbart zueinander liegen.

Von Vorteil ist es, wenn eine der Klappen als die Wölbung des Profils des Rotorblattes durch Verschwenken beeinflussende Wölbklappe aus- gebildet ist. Da die Schwenkstellung der Klappe die Profilmittellinie verändert, insbesondere wölbt, wird eine derartige Klappe als Wölbklappe bezeichnet. Mit der Änderung des Verlaufs der Profilmittellinie verändern sich auch die aerodynamischen Eigenschaften des Rotorblatts.

Eine der Klappen kann bevorzugt als Bremsklappe und/oder als Anfahrhilfen-Klappe ausgebildet sein.

Das Verschwenken der Klappe kann bevorzugt kontinuierlich oder in Stufen vorgenommen werden. Eine kontinuierliche Verstellung lässt ein besonders feines Abstimmen auf die jeweils vorliegende windtechnische Situation zu.

Die Zeichnungen veranschaulichen die Erfindung anhand von Ausführungsbeispielen und zwar zeigt:
- Figur 1: eine Draufsicht auf einen Abschnitt eines mit zwei ae- rodynamischen Klappen versehenen Rotorblatts, das allerdings nicht Teil der Erfinding ist,
- Figur 2: ein weiteres Ausführungsbeispiel einer der Figur 1 ent- sprechenden Darstellung,
- Figur 3: ein Querschnitt durch das Profil eines Rotorblatts,
- Figur 4: eine Seiten-Rücksicht eines Abschnitts eines Rotor- blatts,
- Figur 5: eine Querschnittsansicht eines Rotorblatts mit in Neu- tralstellung stehender Klappe und
- Figur 6: eine Querschnittsansicht eines Rotorblatts mit weit ausgelenkter Klappe.

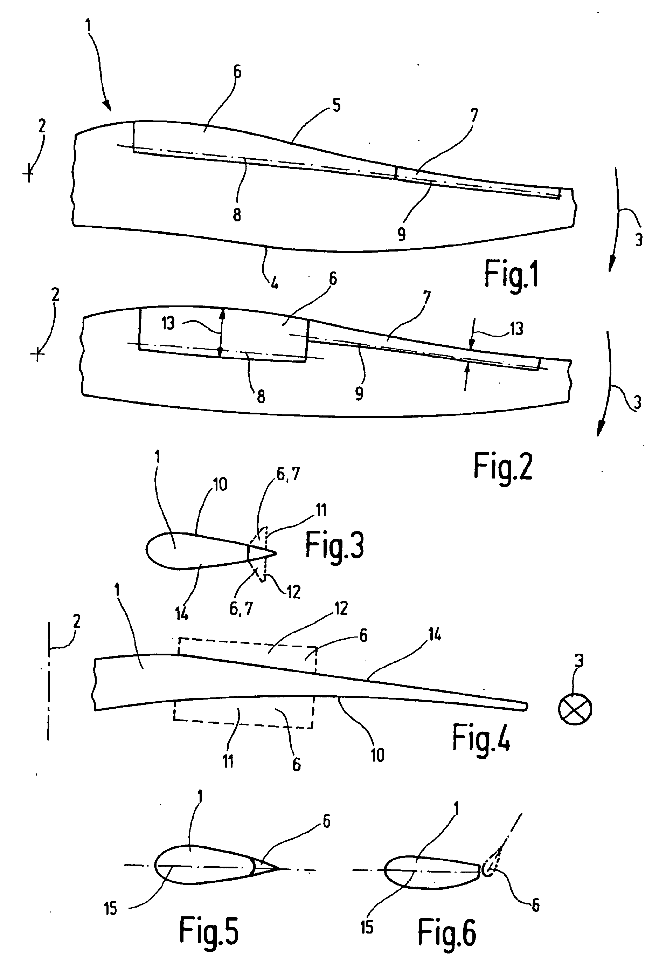

Die Figur 1 zeigt einen Abschnitt eines Rotorblatts 1, das allendings nicht zum Erfindungs gehört, eines nicht näher dargestellten Rotors einer Windenergieanlage. Der Rotor kann beispielsweise drei, jeweils um 120° zueinander versetzte Rotorblätter 1 aufweisen. Im Betrieb dreht sich der Rotor um die in Figur 1 angedeutete Drehachse 2. Die Drehrichtung ist in der Figur 1 mit dem Pfeil 3 angegeben.

Das Rotorblatt 1 weist eine Blattvorderkante 4 und eine Blatthinterkante 5 auf. Die Blattvorderkante 4 zeigt in Drehrichtung 3; die Blatthinterkante 5 liegt zur Drehrichtung 3 entgegengesetzt. Im Bereich der Blatthinterkante 5 des Rotorblatts 1 ist eine erste Klappe 6 und - daran angrenzend- eine zweite Klappe 7 ausgebildet. Beide Klappen 6, 7 sind schwenkbeweglich um eine Drehachse 8 beziehungsweise Drehachse 9 am Rotorblatt 1 gelagert. Die beide Drehachsen 8 und 9 weisen radialen oder etwa radialen Verlauf in Bezug auf den Rotor auf und fluchten beim Ausführungsbeispiel der Figur 1 miteinander. Mittels einer nicht näher dargestellten Steuereinrichtung lassen sich die Klappen 6 und 7 um ihre jeweilige Drehachse 8 und 9 verschwenken. Das jeweilige Verschwenken erfolgt kontinuierlich (stufenlos), wobei jede Klappe 6, 7 -gemäß Figur 3- in Richtung auf die Oberseite 10 des Rotorblatts 1 verschwenkt werden kann, so dass sich die gestrichelte Stellung 11 ergibt oder es ist ein Verschwenken in die entgegengesetzte Richtung möglich, wodurch sich die gestrichelt eingezeichnete Stellung 12 einstellt.

Das Ausführungsbeispiel der Erfindung in der Figur 2 entspricht im Wesentlichen dem Ausführungsbeispiel der Figur 1, so dass nachstehend nur auf die Änderungen eingegangen werden soll. Es ist erkennbar, dass die Klappentiefe 13 der beiden Klappen 6 und 7 unterschiedlich groß ist, wobei sich die Klappe 6 mit der größeren Klappentiefe 13 näher an der Drehachse 2 und die Klappe 7 mit der kleineren Klappentiefe 13 weiter entfernt von der Drehachse 2 befindet. Aufgrund der unterschiedlichen Klappentiefen 13 der beiden Klappen 6 und 7 weisen auch die Drehachsen 8 und 9 unterschiedliche Lagen auf, d.h., sie liegen parallel oder etwa parallel zueinander versetzt.

Die Figur 4 verdeutlicht die Ausstellposition einer Klappe 6 in Seitenansicht des Rotorblatts 1. Die Drehachse 2 liegt in der Zeichnungsebene; das Rotorblatt bewegt sich gemäß Bezugszeichen 3 in die Blattebene hinein. Die mit 11 gekennzeichnete Stellung der Klappe 6, die sich entsprechend auch aus der Figur 3 ergibt, ist in Richtung auf die Oberseite 10 des Rotorblatts orientiert, während die entgegengesetzte Stellung der Klappe 6, die mit 12 gekennzeichnet ist, eine Orientierung der Klappe 6 in Richtung auf die Unterseite 14 des Rotorblatts 1 kennzeichnet.

Die Figur 5 zeigt eine Klappe 6 in Mittel- oder Neutralstellung, d.h., die Profilmittellinie 15 des Rotorblatts 1 verläuft im Wesentlichen geradlinig oder leicht gekrümmt. Wird die Klappe 6 in eine Position gemäß Figur 6 verschwenkt, so ändert sich entscheidend auch der Verlauf der Profilmittellinie 15, so dass sich entsprechend andere aerodynamische Eigenschaften des Rotorblatts 1 ergeben.

Aufgrund der erfindungsgemäßen aerodynamischen Klappe, die insbesondere als Wölbklappe ausgebildet sein kann, ist eine Anpassung an die Anströmung und/oder die Widerstandscharakteristik und/oder die Auftriebscharakteristik möglich. Die Anpassung erfolgt durch entsprechendes Verschwenken einer oder mehrerer Klappen. In den Ausführungsbeispielen sind Rotorblätter mit mehreren Klappen gezeigt. Es ist natürlich auch denkbar, dass ein Rotorblatt nur eine Klappe aufweist. Auch ist es möglich, dass sich eine Klappe oder dass sich mehrere Klappen über die gesamte Länge des Rotorblatts 1 erstreckt/erstrecken. Mit Hilfe der Steuereinrichtung lässt sich die Stellung einer oder mehrerer Klappen derart verändern, dass eine Bremswirkung auftritt. Andererseits ist es auch denkbar, zum Erleichtern des Anfahrens des Rotors die Klappen in eine Position zu bringen, in der sie das Anfahren erleichtern, also einen größeren aerodynamischen Auftrieb bewirken. Ferner ist es aufgrund der Klappen möglich, die Blattbelastung zu verringern, sofern aufgrund der aerodynamischen Bedingungen eine hohe Materialbelastung auftritt. Ferner ist eine Begrenzung der Rotordrehzahl mittels der Klappen einstellbar, wobei derart vorgegangen werden kann, dass es zu einem gezielten Strömungsabriss und/oder zu einer gezielten Verringerung des aerodynamischen Auftriebs kommt. Insgesamt wird damit auch das erreichbare Drehmoment des Rotors entsprechend beeinflusst. Die Klappe 6 im Ausführungsbeispiel der Figuren 1 und 2 kann bevorzugt zum Bremsen oder als Anfahrhilfe genutzt werden. Die Klappe 7 in den Ausführungsbeispielen der Figuren 1 und 2 dient bevorzugt der Performanceanpassung, insbesondere der Lasterhöhung oder der Lastreduktion.

Es ist bevorzugt auch denkbar, dass im Falle mehrerer Klappen diese gegensinnig zueinander verstellt werden, d.h., eine Klappe wird in Richtung auf die Oberseite 10 des Rotorblatts 1 und eine andere Klappe in Richtung auf die Unterseite 14 des Rotorblatts 1 verstellt, wodurch eine effektive und individuelle Anpassung möglich ist.

Abweichend von den sich aus den Ausführungsbeispielen hervorgehenden Drehachsen 8, 9 der Klappen 6, 7, kann auch eine andere Mechanik vorgesehen sein, die zu einem entsprechenden Heraus- oder Hereinschwenken der Klappen führt, wobei diese Bewegung jedoch nicht um eine linienförmige Drehachse erfolgt, sondern entlang einer entsprechenden Verlagerungsbahn.

## Patentansprüche

1. Rotorblatt eines Rotors einer Windenergieanlage, mit sich über die Rotorblattlänge erstreckender Blattvorder- und Blatthinterkante, wobei der Bereich der Blatthinterkante (5) zumindest über einen Abschnitt der Rotorblattlänge als mehrere, unabhängig voneinander im Schwenkwinkel einstellbare Klappen (6,7) ausgebildet ist, wobei die Klappen (6,7) eine unterschiedlich große Klappentiefe (13) aufweisen **dadurch gekennzeichnet, dass** zumindest zwei Drehachsen (8, 9) der Klappen (6, 7) zueinander versetzt sind.

2. Rotorblatt nach Anspruch 1, **dadurch gekennzeichnet, dass** die Klappen (6,7) in Richtung auf die Oberseite (10) und/oder in Richtung auf die Unterseite (14) des Rotorblatts (1) verschwenkbar gelagert sind.

3. Rotorblatt nach einem der vorhergehenden Ansprüche, **gekennzeichnet durch** eine, die Klappen (6,7) in gewünschte Schwenkposition verlagernde und haltende Steuereinrichtung.

4. Rotorblatt nach einem der vorhergehenden Ansprüche, **dadurch gekennzeichnet, dass** die Klappen (6,7) direkt aneinandergrenzen.

5. Rotorblatt nach einem der vorhergehenden Ansprüche, **dadurch gekennzeichnet, dass** eine der Klappen (6,7) als die Wölbung des Profils des Rotorblatts (1) durch Verschwenken beeinflussende Wölbklappe ausgebildet ist.

6. Rotorblatt nach einem der vorhergehenden Ansprüche, **dadurch gekennzeichnet, dass** eine der Klappen (6,7) als Bremsklappe ausgebildet ist.

7. Rotorblatt nach einem der vorhergehenden Ansprüche, **dadurch gekennzeichnet, dass** eine der Klappen (6,7) als Anfahrhilfen-Klappe ausgebildet ist.

8. Rotorblatt nach einem der vorhergehenden Ansprüche, **dadurch gekennzeichnet, dass** der Schwenkwinkel der Klappen (6,7) kontinuierlich oder in Stufen, vorzugsweise mittels der Steuereinrichtung, einstellbar ist.

## Claims

1. A rotor blade of a rotor of a wind turbine, having a blade leading edge and a blade trailing edge which extend over the rotor blade length, wherein the region of the blade trailing edge (5) is over at least a portion of the rotor blade length in the form of a plurality of flaps (6, 7) independently adjustable as regards pivot angle, wherein the flaps (6, 7) differ in flap depth (13), **characterised in that** at least two rotational axes (8, 9) of the flaps (6, 7) are offset in relation to one another.

2. A rotor blade according to claim 1, **characterised in that** the flaps (6, 7) are mounted so as to be pivotable in the direction of the upper side (10) and/or in the direction of the underside (14) of the rotor blade (1).

3. A rotor blade according to any one of the preceding claims, **characterised by** a control device which shifts the flaps (6, 7) into the desired pivot position and holds them therein.

4. A rotor blade according to any one of the preceding claims, **characterised in that** the flaps (6, 7) are directly adjacent.

5. A rotor blade according to any one of the preceding claims, **characterised in that** one of the flaps (6, 7) is in the form of a camber flap influencing the camber of the profile of the rotor blade (1) by pivoting.

6. A rotor blade according to any one of the preceding claims, **characterised in that** one of the flaps (6, 7) is in the form of a brake flap.

7. A rotor blade according to any one of the preceding claims, **characterised in that** one of the flaps (6, 7) is in the form of a starting assistance flap.

8. A rotor blade according to any one of the preceding claims, **characterised in that** the pivot angle of the flaps (6, 7) is adjustable continuously or in steps, preferably by means of the control device.

## Revendications

1. Pale d'un rotor d'une éolienne, avec un bord d'attaque et un bord de fuite s'étendant sur la longueur de la pale de rotor, la zone du bord de fuite de pale (5) étant réalisée, au moins sur un segment de la longueur de la pale de rotor, sous forme de plusieurs volets (6, 7) réglables indépendamment l'un de l'autre quant à l'angle de pivotement, les volets (6, 7) présentant une profondeur de volet (13) de grandeur différente, **caractérisée par le fait qu'**au moins deux axes de rotation (8, 9) des volets (6, 7) sont décalés l'un par rapport à l'autre

2. Pale de rotor selon la revendication 1, **caractérisée par le fait que** les volets (6, 7) sont montés pivotables en direction de la face supérieure (10) et/ou en direction de la face inférieure (14) de la pale de rotor (1).

3. Pale de rotor selon l'une des revendications précédentes, **caractérisée par** un dispositif de commande déplaçant et maintenant les volets (6, 7) dans la position de pivotement désirée.

4. Pale de rotor selon l'une des revendications précédentes, **caractérisée par le fait que** les volets (6, 7) sont directement adjacents l'un à l'autre,

5. Pale de rotor selon l'une des revendications précédentes, **caractérisée par le fait que** l'un des volets (6, 7) est réalisé sous forme de bombage du profilé de la pale de rotor (1) par un volet bombé influençant le pivotement.

6. Pale de rotor selon l'une des revendications précédentes, **caractérisée par le fait que** l'un des volets (6, 7) est réalisé sous forme de volet de freinage.

7. Pale de rotor selon l'une des revendications précédentes, **caractérisée par le fait que** l'un des volets (6, 7) est réalisé sous forme de volet d'assistance de démarrage.

8. Pale de rotor selon l'une des revendications précédentes, **caractérisée par le fait que** l'angle de pivotement des volets (6, 7) est réglable en continu ou par palier, de préférence au moyen du dispositif de commande.
